# FASCICULE DE BREVET EUROPEEN

(11) **EP 0 930 176 B1**
(45) Date de publication et mention de la délivrance du brevet: **16.10.2002**
(21) Numéro de dépôt: 98403349.8
(22) Date de dépôt: 31.12.1998
(51) Int. Cl.: B60B 3/16

(54) **Roue de véhicule automobile, fixée avec des vis à portée plate ou à portée conique**
Fahrzeugrad, festgemacht mit Schrauben mit flacher oder konischer Fläche
Motor vehicle wheel, fixed with screws with flat or conical surface

(30) Priorité: 20.01.1998 FR 9800566
(43) Date de publication de la demande: 21.07.1999
(73) Titulaire: AUTOMOBILES PEUGEOT, 75116 Paris (FR); AUTOMOBILES CITROEN, 92200 Neuilly-sur-Seine (FR)
(72) Inventeur: Bailleux, François, 91400 Val d'Albian (FR)
(74) Mandataire: Bentz, Jean-Paul

(56) Documents cités:
- WO-A-93/17883
- DE-A- 3 027 191
- GB-A- 419 353
- US-A- 1 787 074

## Description

L'invention concerne une roue de véhicule automobile pouvant être fixée avec des vis à portée plate ou des vis à portée conique.

Pour d'évidentes raisons de sécurité, il est nécessaire de garantir la fiabilité de la fixation des roues sur un véhicule automobile.

De façon connue, les roues de véhicule réalisées en tôle d'acier comportent des perçages coniques. La forme particulière donnée à la roue en tôle, ainsi que des vis à portée conique, permettent d'obtenir un assemblage vissé robuste.

Par ailleurs, une roue en alliage léger comporte classiquement des perçages à portée plate. De façon connue, une telle roue peut être fixée sur un véhicule automobile avec des vis à portée plate, une rondelle élastique étant intercalée entre la vis et la roue. Cette solution assure également un assemblage vissé fiable et robuste.

Cependant, elle présente l'inconvénient d'être onéreuse.

En effet, les quatre roues principales d'un véhicule automobile sont généralement en alliage léger, tandis que la roue de secours est en tôle, pour des raisons d'économie.

Pour leur fixation, ces deux types de roue nécessitent donc des vis différentes. Cependant, pratiquement, on ne peut pas utiliser des vis différentes pour la roue de secours, car le risque d'inversion est important et ses conséquences sont trop dangereuses pour l'utilisateur du véhicule. En effet, chaque type de vis, à portée plate ou à portée conique, est adapté aux perçages de la roue et les vis ne peuvent pas être indifféremment utilisées, sans nuire à la fiabilité de l'assemblage.

La solution retenue jusqu'ici par les demanderesses est d'adapter la roue de secours en tôle, lorsque les quatre roues principales sont en alliage, afin de permettre sa fixation avec des vis à portée plate.

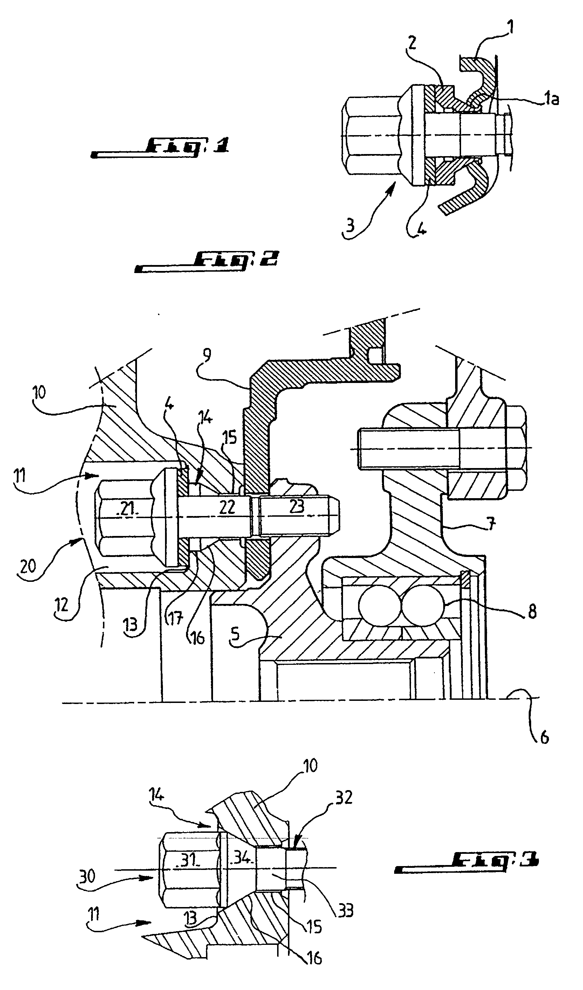

Cette solution est illustrée sur la figure 1. Des inserts 2 sont ajoutés sur la roue en tôle 1 par soudure ou sertissage, au niveau des perçages coniques 1a de la roue. Ils permettent de rendre la roue en tôle 1 compatible avec une vis classique 3 à portée plate. La fixation avec des vis à portée conique n'est par contre plus possible. Une rondelle élastique 4 est placée entre la tête de vis et chaque insert.

Ces inserts permettent d'obtenir une fixation fiable en utilisant les mêmes vis à portée plate pour les quatre roues principales et la roue de secours, mais cette solution est très coûteuse.

L'invention a pour but de pallier ces inconvénients en proposant une roue de véhicule automobile pouvant être fixée indifféremment par des vis à portée plate ou des vis à portée conique.

Ainsi, l'invention concerne une roue de véhicule automobile selon la revendication 1.

Avantageusement, la partie conique du perçage se prolonge par une partie cylindrique qui débouche sur la face intérieure de la roue.

La roue selon l'invention est de préférence réalisée en alliage léger et utilisée comme roue de secours.

L'invention sera mieux comprise et d'autres buts, avantages et caractéristiques de celle-ci apparaîtront plus clairement à la lecture de la description qui suit et qui est faite au regard des dessins annexés représentant des modes non limitatifs de réalisation de l'invention et sur lesquels :

La figure 2 est une vue partielle en coupe, selon l'axe de la roue, d'une roue selon l'invention fixée à l'aide d'une vis à portée plate.

La figure 3 est une vue partielle en coupe axiale d'une roue selon l'invention fixée avec une vis à portée conique.

Les éléments communs aux différentes figures seront désignés par les mêmes repères.

La roue 10 selon l'invention est ici réalisée en alliage léger, par exemple en aluminium. Elle est fixée au moyen d'une vis 20 à portée plate sur le moyeu 5. Le repère 6 désigne l'axe de la roue.

Le moyeu 5 est monté tournant par rapport au pivot 7 grâce à un roulement 8.

Le repère 9 désigne le disque de frein, sur lequel la partie centrale de la roue prend appui.

La roue 10 comporte un perçage 11 pour le vissage de la vis 20.

Ce perçage 11 comporte un premier évidement cylindrique 12 qui débouche sur la face extérieure de la roue et définit une partie annulaire 13. Cette partie annulaire est située au fond du premier évidement 12, et elle est donc formée sur la face extérieure de la roue. Cette partie annulaire entoure un deuxième évidement 14 sensiblement cylindrique qui est formé dans la masse de roue 10 qu'il traverse.

De façon plus précise, cet évidement 14 comporte une partie cylindrique 15 qui débouche sur la face intérieure de la roue 10.

Cette partie cylindrique 15 est reliée à la partie annulaire 13 du perçage par une partie conique 16.

Sur l'exemple de réalisation illustré à la figure 2, l'évidement 14 comporte une autre partie cylindrique 17 entre la partie conique 16 et la partie annulaire 13. Cette autre partie cylindrique 17 résulte du procédé de fabrication de la roue 10 mais ne remplit pas de fonction particulière. Elle peut d'ailleurs être omise, comme cela sera illustré sur la figure 3.

Le diamètre de la partie cylindrique 15 est légèrement supérieur au diamètre du corps 22 de la vis 20 à portée plate.

Par ailleurs, le diamètre de la partie cylindrique 15 correspond sensiblement au plus petit diamètre de la partie conique 16, tandis que le plus grand diamètre de la partie conique 16 correspond au diamètre intérieur de la partie annulaire 13. Ainsi, la partie conique 16 est formée dans la masse de la roue et débouche par son plus grand diamètre dans la partie annulaire 13 formée sur la face extérieure de la roue.

Le diamètre de l'évidement 14 diminue donc depuis la face extérieure de la roue vers la face intérieure de la roue.

Lorsque la vis 20 à portée plate est vissée dans le moyeu 5, comme illustré à la figure 2, la tête 21 de la vis vient en contact avec la partie annulaire 13 du perçage 11 pratiqué dans la roue. De préférence, une rondelle élastique 4 est interposée entre la tête de la vis et la partie annulaire du perçage.

Ainsi, lorsque la roue 10 selon l'invention est fixée à l'aide de vis à portée plate, la fiabilité de l'assemblage correspond à celle qui est obtenue avec des roues en alliage léger classiques.

Ces roues connues comportent un perçage définissant une partie annulaire entourant un évidement cylindrique, pour le passage du corps de la vis.

La présence d'une partie conique 16 entre la partie annulaire 13 et la partie cylindrique 15 est sans utilité lorsque la fixation est réalisée à l'aide de vis à portée plate, mais elle ne gêne pas la fiabilité du montage de la roue.

On se réfère maintenant à la figure 3 qui illustre une roue selon l'invention fixée à l'aide de vis à portée conique.

La vis 30 comporte une tête 31 et un corps 32, constitué d'une tige cylindrique 33 reliée à la tête 31 par une partie conique 34. Le plus petit diamètre de la partie conique 34 correspond au diamètre de la tige cylindrique 33, tandis que le plus grand diamètre de la partie conique 34 correspond sensiblement au diamètre de la tête 31.

Dans l'exemple illustré à la figure 3, le perçage 11 de la roue 10 comporte toujours une partie annulaire 13 qui entoure un évidement 14. Cet évidement est constitué d'une partie conique 16 s'étendant depuis la partie annulaire 13 et d'un évidement cylindrique 15 qui relie cet évidement conique à la face intérieure de la roue. Le diamètre intérieur de la partie annulaire 13 est supérieur au diamètre de l'évidement cylindrique 15.

Lorsque la vis 30 est vissée dans le moyeu, elle se trouve dans la position illustrée à la figure 3. La partie conique 34 du corps 32 de la vis vient ainsi en appui sur la partie conique 16 du perçage de la roue.

La tige cylindrique 33 de la vis 30 comporte un filetage qui permet le vissage de la vis dans le moyeu 5.

On obtient ainsi un assemblage vissé dont la fiabilité correspond à celle qui est obtenue pour des roues en tôle vissées avec des vis à portée conique.

Les figures 2 et 3 montrent que la roue de véhicule automobile selon l'invention peut être fixée indifféremment avec des vis à portée plate et des vis à portée conique, tout en garantissant la fiabilité de l'assemblage.

Ceci est obtenu grâce aux formes particulières données aux perçages réalisés dans la roue pour le passage des vis de fixation.

La roue selon l'invention peut avantageusement servir de roue de secours.

Elle est réalisée en alliage léger, comme l'aluminium. Elle est plus légère qu'une roue en tôle, d'autant plus que la forme de la roue peut être optimisée pour correspondre aux exigences d'endurance d'une roue à usage temporaire. La masse de la roue est ainsi réduite au strict minimum.

Dans le même but, un pneu du type galette sera avantageusement utilisé.

Lorsque les quatre roues principales du véhicule sont en alliage léger et donc fixées avec des vis à portée plate, la fixation de la roue de secours est assurée avec des vis du même type.

Dans le cas où les quatre roues principales sont en tôle et donc fixées avec des vis à portée conique, la roue de secours peut également être fixée avec des vis à portée conique.

Ainsi, la roue de secours peut être fixée de façon fiable avec des vis à portée conique, comme avec des vis à portée plate, d'autant plus que la roue de secours n'est qu'à usage temporaire.

La roue de véhicule selon l'invention permet donc de s'affranchir des inserts qui sont normalement soudés ou sertis sur une roue en tôle, notamment une roue de secours, pour permettre de la fixer de façon fiable avec des vis à portée plate, lorsque les quatre roues principales sont en alliage léger.

La roue de véhicule automobile selon l'invention permet donc d'éviter les risques qui pourraient résulter d'une confusion entre les deux types différents de vis.

Enfin, les signes de référence insérés après les caractéristiques techniques figurant dans les revendications ont pour seul but de faciliter la compréhension de ces dernières et ne sauraient en limiter la portée.

## Revendications

1. Roue de véhicule automobile réalisée en alliage léger, comme l'aluminium comportant des perçages pour sa fixation sur ledit véhicule à l'aide de vis, lesdits perçages (11) comportant une partie annulaire (13) formée sur la face extérieure de la roue pouvant assurer une fixation fiable de la roue sur le véhicule avec des vis (20) à portée plate **caractérisée en ce que** lesdits perçages (11) comportent une partie conique (16) dans la masse de la roue, débouchant par son plus grand diamètre dans ladite partie annulaire (13) pour aussi permettre la fixation de la roue avec des vis (30) à portée conique, tout en assurant une fixation fiable de la roue sur le véhicule.

2. Roue selon la revendication 1, **caractérisée en ce que** ladite partie conique (16) du perçage se prolonge par une partie cylindrique (15) qui débouche sur la face intérieure de la roue.

3. Utilisation d'une roue selon l'une des revendications 1 à 2 comme roue de secours.

## Patentansprüche

1. Kraftfahrzeugrad, hergestellt aus Leichtmetall-Legierung, wie Aluminium, das Bohrungen enthält, um es mittels Schrauben am Fahrzeug zu befestigen, wobei die Bohrungen (11) einen Ringbereich (13) enthalten, der an der Außenseite des Rads gebildet ist und eine zuverlässige Befestigung des Rads am Fahrzeug mit Schrauben (20) mit flacher Auflage gewährleisten kann, **dadurch gekennzeichnet, dass** die Bohrungen (11) in der Radmasse einen konischen Bereich (16) enthalten, der mit seinem größeren Durchmesser in den ringförmigen Bereich (13) mündet, um damit auch die Befestigung des Rads mit Schrauben (30) mit konischer Auflage zu ermöglichen und dabei eine zuverlässige Befestigung des Rads am Fahrzeug zu gewährleisten.

2. Rad nach Anspruch 1, **dadurch gekennzeichnet, dass** sich der konische Bereich (16) der Bohrung in einem zylinderförmigen Bereich (15) fortsetzt, der an der Innenseite des Rads ausmündet.

3. Anwendung eines Rads nach einem der Ansprüche 1 und 2 als Reserverad.

## Claims

1. A motor-vehicle wheel made of a light alloy, such as aluminium, having holes for fixing it on to said vehicle by means of screws, said holes (11) having an annular portion (13) formed on the outer face of the wheel which enables a reliable fixing of the wheel on to the vehicle with screws (20) with a flat bearing surface **characterized in that** said holes (11) have a conical portion (16) in the body of the wheel, which at its largest diameter opens into said annular portion (13) so as also to allow fixing of the wheel with screws (30) with a conical bearing surface, whilst ensuring a reliable fixing of the wheel on to the vehicle.

2. Wheel according to Claim 1, **characterized in that** said conical portion (16) of the hole is followed by a cylindrical portion (15), which opens onto the inner face of the wheel.

3. Use of a wheel according to one of Claims 1 to 2 as a spare wheel.
